# EUROPEAN PATENT APPLICATION

(11) **EP 4 550 181 A1**
(43) Date of publication of application: **07.05.2025**
(21) Application number: 23829707.1
(22) Date of filing: 06.05.2023
(51) Int. Cl.: G06F 21/31

(54) **UNLOCKING METHOD, TERMINAL DEVICE, AND STORAGE MEDIUM**

(30) Priority: 30.06.2022 CN 202210764087
(71) Applicant: ZTE CORPORATION, Shenzhen, Guangdong 518057 (CN)
(72) Inventor: SUN, Changqing, Shenzhen, Guangdong 518057 (CN)
(74) Representative: Carangelo, Pierluigi
(86) International application number: PCT/CN2023/092581
(87) International publication number: WO 2024/001521

(57) **Abstract**

The present disclosure relates to the field of terminal devices. Provided are an unlocking method, a terminal device and a storage medium. The method comprises: acquiring a target identifier corresponding to at least one sub-code in a preset password; displaying the target identifier according to an input position of the sub-code, wherein the input position of the sub-code dynamically changes according to a preset transformation rule; acquiring a first password, the first password being input according to the target identifier; and performing unlocking according to the preset password, the preset transformation rule and the first password.

## Description

### Cross-Reference to Related Application

The present disclosure is based on Chinese Patent Application No. CN 202210764087.4 filed on June 30, 2022 and entitled "Unlocking Method, Terminal Device and Storage Medium", and claims priority to the patent application, the disclosure of which is incorporated herein by reference in its entirety.

### Technical Field

The embodiments of the present disclosure relate to the technical field of terminal devices, and in particular, to an unlocking method, a terminal device and a storage medium.

### Background

With the continuous development of information technologies, terminal devices (such as a computer, a mobile phone, or a PDA) used by people are increasingly intelligent, and at the same time, people pay more and more attention to the protection of personal privacy. More and more functions need to be ensured by means of a password, such as screen unlocking, information query, and online payment. A user has a requirement to input a password for setting or unlocking in a public place. In this process, the password is easy to be recognized by other people, having a risk of password leakage, and thus the security is low. Therefore, how to improve the security during password unlocking to avoid password leakage becomes an urgent problem to be solved.

### Summary

Embodiments of the present disclosure provide an unlocking method, a terminal device, and a storage medium, which are intended to improve the security during password unlocking to avoid password leakage.

Embodiments of the present disclosure provide an unlocking method, comprising: a target identifier corresponding to at least one sub-code in a preset password is acquired; the target identifier is displayed according to an input position of the sub-code, wherein the input position of the sub-code dynamically changes according to a preset transformation rule; a first password is acquired, the first password being input according to the target identifier; and unlocking is performed according to the preset password, the preset transformation rule and the first password.

Embodiments of the present disclosure further provide a terminal device, comprising a processor, a memory, a computer program stored on the memory and executable by the processor, and a data bus for realizing connection and communication between the processor and the memory, wherein the computer program, when being executed by the processor, implements the steps of any unlocking method provided according to embodiments of the present disclosure.

Embodiments of the present disclosure further provide a storage medium for computer-readable storage, the storage medium storing one or more programs which can be executed by one or more processors to implement the steps of any unlocking method provided according to embodiments of the present disclosure.

### Brief Description of the Drawings

Fig. 1 is a schematic flowchart of steps of an unlocking method provided according to embodiments of the present disclosure;
Fig. 2 is a schematic flowchart of a sub-step of the unlocking method in Fig. 1;
Fig. 3 is a schematic diagram of an unlocking page provided according to embodiments of the present disclosure;
Fig. 4 is another schematic diagram of an unlocking page provided according to embodiments of the present disclosure;
Fig. 5 is a schematic flowchart of a sub-step of the unlocking method in Fig. 1;
Fig. 6(a) to Fig. 6(d) are schematic diagrams of an unlocking password provided according to embodiments of the present disclosure;
Fig. 7(a) to Fig. 7(f) are schematic diagrams of another unlocking password provided according to embodiments of the present disclosure;
Fig. 8(a) to Fig. 8(d) are schematic diagrams of still another unlocking password provided according to embodiments of the present disclosure; and
Fig. 9 is a schematic structural block diagram of a terminal device provided according to embodiments of the present disclosure.

### Detailed Description of the Embodiments

Hereinafter, the technical solutions in the embodiments of the present disclosure will be described clearly and completely with reference to the accompanying drawings of the embodiments of the present disclosure. Obviously, the embodiments as described are only some of the embodiments of the present disclosure, and are not all of the embodiments. All other embodiments obtained by a person of ordinary skill in the art on the basis of the embodiments of the present disclosure without involving any inventive effort all fall within the scope of protection of the present disclosure.

The flowcharts shown in the accompanying drawings are only illustrative, do not necessarily comprise all the content and operations/steps, nor do they have to be executed in the described order. For example, some operations/steps may be broken down, combined, or partially combined, and therefore the actual execution order may vary according to actual situations.

It should be understood that the terminologies used in this disclosure are for the object of describing particular embodiments only and are not intended to limit the present disclosure. As used in the description and the appended claims of the present disclosure, the singular forms "a", "an" and "the" are intended to comprise plural forms as well, unless the context clearly indicates exceptions.

Embodiments of the present disclosure provide an unlocking method, a terminal device and a storage medium. The unlocking method may be applied to a terminal device, and the terminal device may be an electronic device such as a mobile phone, a tablet computer, a notebook computer, a desktop computer, a personal digital assistant and a wearable device.

There are two related methods for improving the security of unlocking: a dynamic change to an input page, or using other devices (comprising sending to a remote server) to assist in authentication. The dynamic change to an input page is mainly aimed at an input page of a user password. By means of automatically generating a random number array, each time a user performs an input, a number array of an unlocking page is different. An unlocking gesture trace of the user is not easily captured and remembered, but the input of the user is a fixed real password. Using other devices for authentication is generally dependent on a third-party device, for example, sending a dynamic authentication code by means of a bound mobile phone number, or performing secondary calculation matching for a password by means of other wearable devices such as a watch to ensure security. A third-party service or device is required to assist in authentication, and thus there is a disadvantage in convenience.

In embodiments of the present disclosure, a dynamic password security solution is used. An unlocking password input by a user on an unlocking page is not a fixed password that remains unchanged, but is a dynamic password input according to a user-defined identifier, and the password input each time may be different. Hence, even if the unlocking password input by the user is recorded, or even the unlocking password input multiple times is recorded, the real password set by the user still cannot be acquired. Thus, even if the user's device is lost or another person gets the user's device, the device cannot be unlocked by recording an operation imitating the user, thereby providing better security assurance for the user.

Hereinafter, some embodiments of the present disclosure will be described in detail in combination with the accompanying drawings. The following embodiments and features in the embodiments may be combined with one another without conflicts.

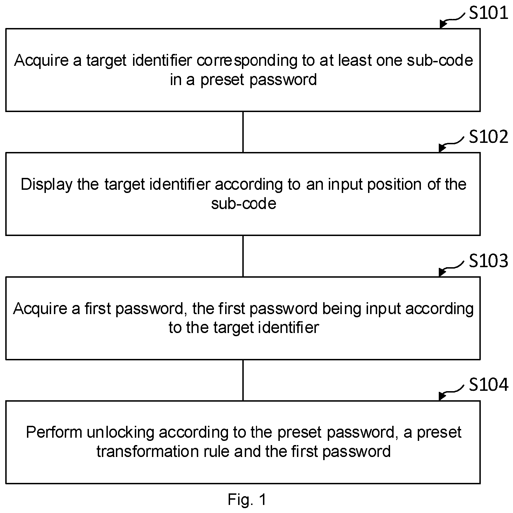

Fig. 1 is a schematic flowchart of steps of an unlocking method provided according to embodiments of the present disclosure.

As shown in Fig. 1, the unlocking method comprises steps S101 to S104.

Step S101: a target identifier corresponding to at least one sub-code in a preset password is acquired.

The preset password may comprise a plurality of sub-codes, and the preset password may be an unlocking password for an unlocking page that is preset by a user. When the user sets the preset password, the target identifier corresponding to at least one sub-code in the preset password may be set at the same time.

In some embodiments, the preset password may comprise numbers, letters, symbols, and patterns. For example, the preset password may be a numeric password, a letter password, a combination password, or a pattern password. When the preset password is a numeric password, a sub-code in the preset password may be a number; and when the preset password is a pattern password, a sub-code in the preset password may be a point.

In some embodiments, the target identifier may comprise color, shape, pattern, and texture, wherein the color may comprise black, white, red, yellow, gray, blue, and the like; the shape may comprise triangle, circle, quadrangle, pentagon, star, irregular shape, and the like; the pattern may comprise human pattern, animal pattern, plant pattern, cartoon pattern, and the like; and the texture may comprise crack texture, pattern texture, geometric texture, granular texture, patchwork texture, and the like. For example, the target identifier may be red, and the target identifier corresponds to sub-code 2 of the numeric password.

Exemplarily, the preset password set by the user is 1234, and sub-code 1 in the preset password is set to correspond to a triangle, then the triangle is the target identifier corresponding to sub-code 1. During unlocking of the unlocking page, the terminal device can obtain that the target identifier corresponding to sub-code 1 in the preset password is the triangle.

In some embodiments, the terminal device can acquire target identifiers corresponding to a plurality of sub-codes in the preset password. For example, the preset password is 1234, wherein 2 corresponds to black, 3 corresponds to white, and 4 corresponds to red. In some embodiments, after acquiring the target identifier corresponding to at least one sub-code in the preset password, the terminal device can also acquire other identifiers other than the plurality of target identifiers. For example, the preset password is 1234, it is obtained that the target identifier corresponding to sub-code 1 in the preset password is a triangle, and the terminal device can also acquire identifiers for a quadrangle, a pentagon, and a hexagon.

Step S102: the target identifier is displayed according to an input position of the sub-code.

The sub-code refers to a sub-code corresponding to the target identifier in the preset password, and the input position of the sub-code dynamically changes according to a preset transformation rule. The unlocking page comprises a screen unlocking page, an information query unlocking page, an online payment unlocking page, and the like. The target identifier is displayed according to an input position of a corresponding sub-code; the input position of the sub-code changes dynamically; and a display position of the target identifier changes along with a change in the input position of the sub-code.

In some embodiments, the preset transformation rule may be random transformation rule. For example, the input position of the sub-code corresponding to the target identifier and the display position of the target identifier are randomly transformed at a preset time interval. For another example, after it is detected that the unlocking page is awakened, a sub-code input position is randomly determined as the input position of the sub-code corresponding to the target identifier, and the target identifier is displayed at the input position of the sub-code.

In some embodiments, the preset transformation rule may be a cyclic transformation rule, and the cyclic transformation rule refers to a rule of transforming input positions of sub-codes according to a cyclic order. For example, the input position of the sub-code corresponding to the target identifier is a first position, after the input positions of the plurality of sub-codes are transformed according to the cyclic transformation rule, the input position of the sub-code is a second position, and after the input positions of the sub-codes are transformed again according to the cyclic transformation rule, the arrangement order of the input position of the sub-code is a third position.

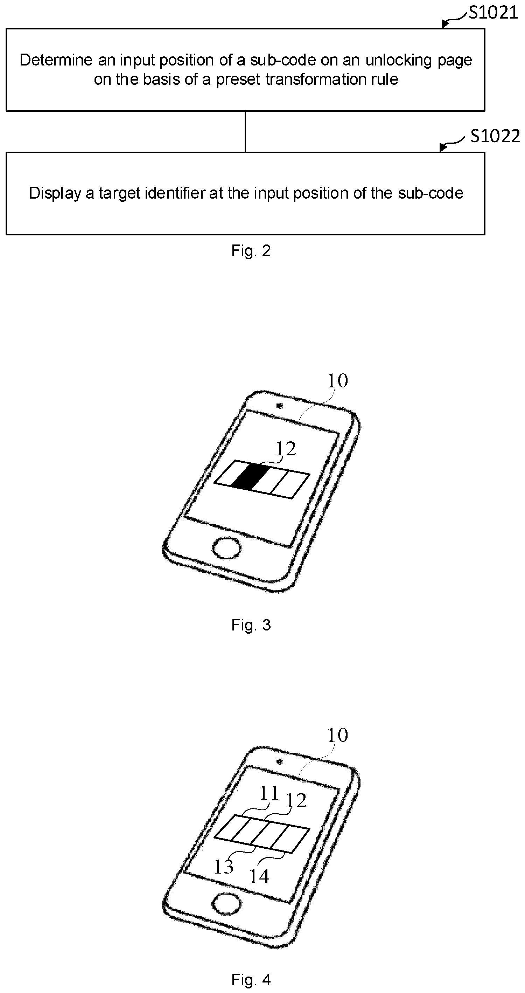

In some embodiments, as shown in Fig. 2, step S102 comprises: sub-steps S1021 to S1022.

Sub-step S1021: the input position of the sub-code on an unlocking page is determined on the basis of a preset transformation rule.

The unlocking page comprises input positions of a plurality of sub-codes of an unlocking password. The unlocking password may be a password input by a user on the unlocking page, and the unlocking password is used for unlocking the unlocking page. The unlocking password in the embodiments of the present disclosure is a dynamic password, for example, the unlocking password changes along with a change in the input position of the sub-code.

Exemplarily, after it is detected that the unlocking page is awakened, on the basis of a random transformation rule, the input position of the sub-code corresponding to the target identifier is randomly determined from among the input positions of the plurality of sub-codes on the unlocking page.

In some embodiments, a plurality of sub-codes in a preset password are arranged on the basis of a preset transformation rule; a first sub-code corresponding to a target identifier is determined from among the plurality of arranged sub-codes; an input position of the first sub-code on an unlocking page is determined according to an arrangement position of the first sub-code in the plurality of arranged sub-codes.

During determination of the display position of the target identifier, a target input position may be determined from among a plurality of input positions on the unlocking page on the basis of the preset transformation rule. The plurality of input positions refer to the input positions of the plurality of sub-codes of the unlocking password set on the unlocking page. The target input position refers to the input position of the first sub-code. For example, the arrangement position of the first sub-code in the plurality of sub-codes is determined as the input position of the first sub-code on the unlocking page, and the arrangement position and the input position are, for example, a third position in the plurality of sub-codes.

Sub-step S1022, the target identifier is displayed at the input position of the sub-code.

After the input position of the sub-code is determined, the target identifier can be displayed at the input position of the sub-code. Exemplarily, as shown in Fig. 3, the target identifier may be black, and the input positions of the plurality of sub-codes of the unlocking password comprise the input position of the sub-code corresponding to the target identifier, and the target identifier corresponds to sub-code 2 of the numeric password.

The display position of the target identifier may not be limited to the input position of the sub-code. For example, the display position of the target identifier may be above or below the input position of the sub-code, may constitute a border of the input position of the sub-code, and the like, which is not specifically limited in this embodiment.

In some embodiments, input positions for inputting a plurality of sub-codes of an unlocking password are acquired on an unlocking page; at least one first input position is determined from among the input positions of the plurality of sub-codes; display positions of at least one target identifier are determined according to the at least one first input position; and the at least one target identifier is displayed at the display positions of the target identifiers.

The quantity of the first input positions may correspond to the quantity of the target identifiers, for example, the quantities are the same. A first input position may be used as a display position of a target identifier, or a position at a preset distance from the first input position may be determined as the display position of the target identifier; and the at least one target identifier is dynamically displayed on the unlocking page, so that a user inputs the unlocking password according to the target identifier displayed on the unlocking page, thereby improving the security during password unlocking.

Exemplarily, if the preset password set by the user is 1234, and sub-code 1 in the preset password is set to correspond to a black identifier. As shown in figure 3, during unlocking of an unlocking page 10, a terminal device determines, on the basis of a preset transformation rule, that the input position of a sub-code corresponding to the target identifier on the unlocking page 10 is a second position, then the black identifier is displayed at an input position 12 of a second sub-code on the unlocking page 10, and the identifier is not displayed at other input positions on the unlocking page 10.

Exemplarily, if the preset password set by the user is 1234, and sub-code 1 in the preset password is set to correspond to the black identifier, sub-code 2 in the preset password is set to correspond to white, sub-code 3 is set to correspond to gray, and sub-code 4 is set to correspond to a random color. As shown in Fig. 4, during unlocking of the unlocking page 10, the terminal device determines, on the basis of a preset transformation rule, that the input position of sub-code 1 is a second position, the input position of sub-code 2 is a fourth position and the input position of sub-code 3 is a first position on the unlocking page 10, then a grey identifier is displayed at an input position 11 of the first sub-code, a black identifier is displayed at an input position 12 of the second sub-code, a random color identifier such as a blue identifier is displayed at an input position 13 of the third sub-code, and a white identifier is displayed at an input position 14 of the fourth sub-code on the unlocking page 10.

Step S103: a first password is acquired, the first password being input according to the target identifier.

On an unlocking page, a target identifier is displayed at input positions for inputting a plurality of sub-codes of an unlocking password, and the target identifier may prompt a user to input a sub-code corresponding to the target identifier at a corresponding output position. The target identifier is displayed according to an input position of a corresponding sub-code; the input positions of the plurality of sub-codes of the unlocking password change dynamically; and a display position of the target identifier changes along with a change in the input position of the corresponding sub-code.

In some embodiments, in response to an input operation on the unlocking page according to the target identifier, the first password input on the unlocking page is acquired. The first password is determined according to a password input mode set on the unlocking page, for example, if the input mode of the plurality of sub-codes of the unlocking password that is set on the unlocking page is a numeric keyboard, the first password is a numeric password. For another example, if the input mode of the plurality of sub-codes of the unlocking password set on the unlocking page is a plurality of pattern points, the first password is a pattern password.

Step S104: unlocking is performed according to the preset password, the preset transformation rule and the first password.

The first password is a dynamic password, the preset password is an original password set by a user, the first password changes along with a change in the input position of the sub-code corresponding to the target identifier, and the change in the input position of the sub-code can be determined according to the preset transformation rule. Therefore, according to the preset password, the preset transformation rule and the first password, it can be determined whether the unlocking page can be unlocked.

In some embodiments, the preset password is converted according to the preset transformation rule to obtain a second password; the first password is matched with the second password to obtain a first matching result; and unlocking is performed according to the first matching result. The first matching result comprises: the first password matches the second password, and the first password does not match the second password; and whether to perform an unlocking operation can be accurately determined according to the first matching result.

For example, after the first matching result is obtained, the unlocking page is unlocked according to the first matching result. If the first matching result is that the first password matches the second password, an unlocking operation is performed on the unlocking page, and unlocking of the unlocking page succeeds. If the first matching result is that the first password does not match the second password, no unlocking operation is performed on the unlocking page, and unlocking of the unlocking page fails.

Exemplarily, the preset password is 1234, the target identifier corresponding to sub-code 1 in the preset password is a triangle, and it is determined, on the basis of the preset transformation rule, that the input position of sub-code 1 corresponding to the target identifier on the unlocking page is transformed from the first position to the second position, then a triangle identifier is displayed at the input position of the second sub-code on the unlocking page. If the first password input by the user on the unlocking page is 2134, the preset password 1234 is converted according to the preset transformation rule, and sub-code 1 in the preset password 1234 is transformed from the first position to the second position, so that a second password 2134 is obtained. The first password 2134 is matched with the second password 2134, and the first password is equal to the second password; therefore, an unlocking operation is performed on the unlocking page, and the unlocking page is successfully unlocked.

In some embodiments, the first password is parsed according to the preset transformation rule to obtain a target password; the target password is matched with the preset password to obtain a second matching result; and unlocking is performed according to the second matching result. The second matching result comprises: the target password matches the preset password, and the target password does not match the preset password; and whether to perform an unlocking operation can be accurately determined according to the first matching result.

For example, the unlocking page is unlocked according to the second matching result. If the second matching result is that the target password matches the preset password, an unlocking operation is performed on the unlocking page, and unlocking of the unlocking page succeeds. If the second matching result is that the target password does not match the preset password, no unlocking operation is performed on the unlocking page, and unlocking of the unlocking page fails.

Exemplarily, the preset password is 1234, the target identifier corresponding to sub-code 2 in the preset password is black, and it is determined, on the basis of the preset transformation rule, that the input position of sub-code 2 corresponding to the target identifier on the unlocking page is transformed from the second position to the third position, then a black identifier is displayed at the input position of the third sub-code on the unlocking page. If the first password input by the user on the unlocking page is 2134, the first password 2134 is parsed according to the preset transformation rule, that is, sub-code 1 at the second position in the first password 2134 is transformed to the third position, so that a target password 2314 is obtained. The preset password 1234 is matched with the target password 2134, and the first password is not equal to the second password; therefore, no unlocking operation is performed on the unlocking page, and unlocking of the unlocking page fails.

Exemplarily, the preset password is 1234, and it is determined, according to the preset transformation rule, that the input position of sub-code 2 is transformed from the second position to the third position. If the first password input by the user on the unlocking page is 1324, the first password 1324 is parsed according to the preset transformation rule, that is, sub-code 3 at the second position in the first password 1324 is transformed to the third position, so that a target password 1234 is obtained. The target password 1234 is matched with the preset password 1234, and the first password is equal to the second password; therefore, unlocking of the unlocking page succeeds.

In some embodiments, after the first password is parsed according to the preset transformation rule to obtain the target password, the method further comprises: the target password is converted on the basis of a preset password conversion rule to obtain a new target password. The password conversion rule may be preset by a user, wherein the input first password is a pseudo password, and the new target password obtained by converting the first password on the basis of the password conversion rule is a real password. By means of inputting the pseudo password as the unlocking password, even if other people recognize the password input by the user on the unlocking page, only the pseudo password can be obtained, and a real preset password cannot be obtained, thereby improving the security of the unlocking password.

In some embodiments, after the preset password is converted according to the preset transformation rule to obtain the second password, the method further comprises: converting the second password on the basis of the preset password conversion rule to obtain a new second password. Reference can be made to the foregoing corresponding embodiments for obtaining a new target password, which can also improve the security of the unlocking password, and they will not be repeated herein.

In some embodiments, after unlocking is performed, unlocking prompt information is displayed, the unlocking prompt information comprising unlocking success information and unlocking failure information. The unlocking prompt information may be text information, voice information, image information, page jitter information, and the like. For example, the unlocking success information is "unlocking succeeds", and the unlocking failure information is "unlocking fails, please re-enter a password".

According to the unlocking method provided in the foregoing embodiments, a target identifier corresponding to at least one sub-code in a preset password is acquired; the target identifier is displayed according to an input position of the sub-code on an unlocking page, wherein the input position of the sub-code dynamically changes according to a preset transformation rule; a first password is acquired, the first password being input on the unlocking page according to the target identifier; and unlocking is performed according to the preset password, the preset transformation rule and the first password. In the embodiments of the present disclosure, the input position of the sub-code corresponding to the target identifier changes dynamically. The input first password is not a fixed password the remains unchanged, but is a dynamic password input according to the dynamically displayed target identifier, that is, unlocking passwords input multiple times may be different, thereby greatly improving password security, and avoiding the risk of passive leakage of passwords during unlocking.

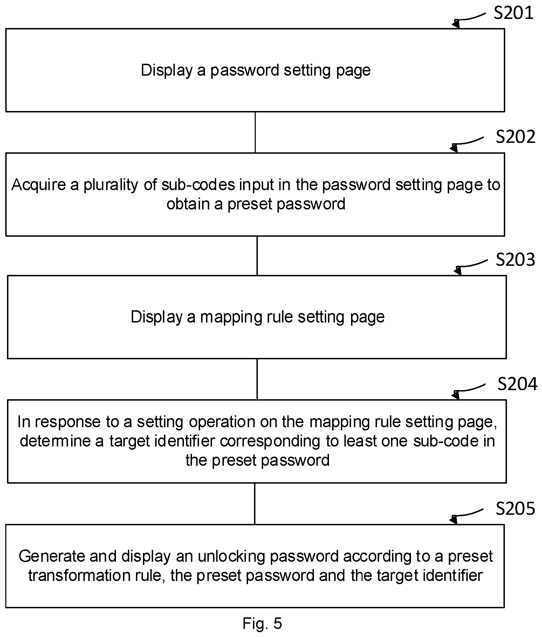

As shown in Fig. 5, the described unlocking method further comprises steps S201 to S205.

Steps S201 to S205 may be a password setting method applied to the described unlocking method. The password setting method may be executed before step S101, that is, a preset password and a target identifier corresponding to at least one sub-code in the preset password may be preset through steps S201 to S205 below. During unlocking, a corresponding unlocking method may be executed according to a preset password and a target identifier corresponding to at least one sub-code in the preset password.

The password setting method is specifically explained and described below in steps S201 to S205:
Step S201, a password setting page is displayed.

A password setting page is displayed by means of a display of a terminal device, the password setting page being used for setting a preset password for an unlocking page. The password type of an unlocking password for the unlocking page can be set by means of the password setting page, for example, the password type of the unlocking password comprises a numeric password, a letter password, a combination password, a pattern password, or the like.

In some embodiments, after the password type of the unlocking password for the unlocking page is set by means of the password setting page, a corresponding password input mode is displayed during unlocking of the unlocking page. If the password type of the unlocking password set by means of the password setting page is a numeric password, when unlocking is performed through the unlocking page, the unlocking page displays a numeric keyboard and a password input box for the unlocking password. If the password type of the unlocking password set by means of the password setting page is a pattern password, the unlocking page displays a plurality of pattern points for a user to connect.

Step S202: a plurality of sub-codes input in the password setting page is acquired to obtain a preset password.

The preset password may comprise numbers, letters, symbols, and patterns. When the preset password is a numeric password, the plurality of sub-codes may be a plurality of numbers; and when the preset password is a pattern password, the plurality of sub-codes may be a plurality of points.

In some embodiments, in response to an input operation on the password setting page, a plurality of sub-codes input in the password setting page are acquired to obtain a preset password. The data type of the plurality of sub-codes is obtained according to the password type of the unlocking password set by means of the password setting page, for example, if the unlocking password set by a user is a numeric password, the plurality of sub-codes of the preset password are numerical values.

In some embodiments, a password conversion rule setting page is displayed; a password conversion rule set in the password conversion rule setting page is acquired; and the preset password is converted on the basis of the password conversion rule to obtain a new preset password. After the preset password is acquired, a pseudo password of the preset password can be set by means of the password conversion rule setting page, and the pseudo password is the new preset password obtained by converting the preset password by means of the password conversion rule.

During unlocking of the unlocking page, the pseudo password (the new preset password) may be input as the unlocking password, so that even if other people recognize the password input by the user on the unlocking page, only the pseudo password can be obtained, and a real preset password cannot be obtained, thereby improving the security of the unlocking password.

Exemplarily, the preset password set by the user is 1234, and the complexity of the password conversion rule is set by the user. For example, the password conversion rule is a password number plus 1. On the basis of the password conversion rule set by the user, a new preset password, i.e. a pseudo password, is generated from the preset password of the user, and is displayed to the user, and the converted pseudo password is 2345.

Step S203: a mapping rule setting page is displayed.

After the preset password is obtained, the mapping rule setting page is displayed in the display of the terminal device, the mapping rule setting page being used for setting the correspondence between at least one sub-code in the preset password and a target identifier.

In some embodiments, the target identifier may comprise color, shape, pattern, and texture. The mapping rule setting page may comprise a plurality of selection buttons for the target identifiers; and target identifiers corresponding to at least one sub-code may be selected by means of the selection buttons.

In some embodiments, the mapping rule setting page may comprise a plurality of preset mapping rule templates, and a user may quickly set the correspondence between at least one sub-code in the preset password and a target identifier on the basis of the mapping rule templates. In some embodiments, a user may freely set a mapping rule suitable for the user according to an actual situation, and save the set mapping rule as a mapping rule template, so as to facilitate subsequent use.

Step S204: in response to a setting operation on the mapping rule setting page, a target identifier corresponding to least one sub-code in the preset password is determined.

A user can perform a setting operation on the mapping rule setting page; and in response to the setting operation on the mapping rule setting page, the terminal device determines target identifiers respectively corresponding to one or more sub-codes in the preset password. The complexity of the target identifiers corresponding to the sub-codes may be set by the user. For example, the user may set a mapping scheme between one or more sub-codes and a target identifier.

For example, the preset password set by the user is 1234, and then sub-code 1 in the preset password may be set to correspond to a target identifier of a triangle, and the triangle is the target identifier corresponding to sub-code 1. During unlocking of the unlocking page, the terminal device can obtain that the target identifier corresponding to sub-code 1 in the preset password is a triangle, so that the target identifier of the triangle can be displayed at the input positions of the plurality of sub-codes on the unlocking page.

For example, the preset password set by the user is 1234, and in response to the setting operation on the mapping rule setting page, sub-code 2 in the preset password may be set to correspond to black, sub-code 3 may be set to correspond to white, and sub-code 4 may be set to correspond to red. During unlocking of the unlocking page, the terminal device can obtain that the target identifier corresponding to sub-code 2 in the preset password is black, the target identifier corresponding to sub-code 3 is white, the target identifier corresponding to sub-code 4 is red, and the target identifier corresponding to sub-code 1 is a random color. Thus, a black identifier, a white identifier and a red identifier can be respectively displayed at the input positions of the plurality of sub-codes on the unlocking page, For example, the borders of the input positions or the backgrounds of the input positions are displayed as corresponding black, white, and red, respectively.

Step S205: according to a preset transformation rule, the preset password and the target identifier, an unlocking password is generated and displayed.

The preset transformation rule comprises a random transformation rule and a cyclic transformation rule; the unlocking password is used for unlocking an unlocking page; the preset password can be transformed by means of the preset transformation rule so as to obtain one or more unlocking passwords; and a display position of a target identifier is determined according to an arrangement position of a target sub-code corresponding to the target identifier in the unlocking password. By displaying an unlocking password and a target identifier, a user can be taught how to input an unlocking password on an unlocking page according to the target identifier, so that dynamic change and dynamic input of the unlocking password can be realized, thereby improving password security and avoiding password leakage.

In some embodiments, the preset password is converted according to the preset transformation rule to obtain an unlocking password; a target sub-code corresponding to the target identifier in the unlocking password is determined; and the unlocking password is displayed, and the target identifier is displayed according to the target sub-code. There may be a plurality of unlocking passwords, there is at least one target sub-code, and the display position of a target identifier corresponding to each unlocking password may be different. The display position of the target identifier is determined according to the target sub-code, and the display position of the target identifier may be the same as or different from the display position of the target sub-code, for example, the display position of the target identifier may be beside the display position of the target sub-code, which is not specifically limited in the embodiments of the present disclosure.

In some embodiments, description information of an unlocking password is acquired, the description information being used for describing a generation mode and a usage mode of the unlocking password; and the description information is displayed. The description information may be text information, image information, voice information, and the like.

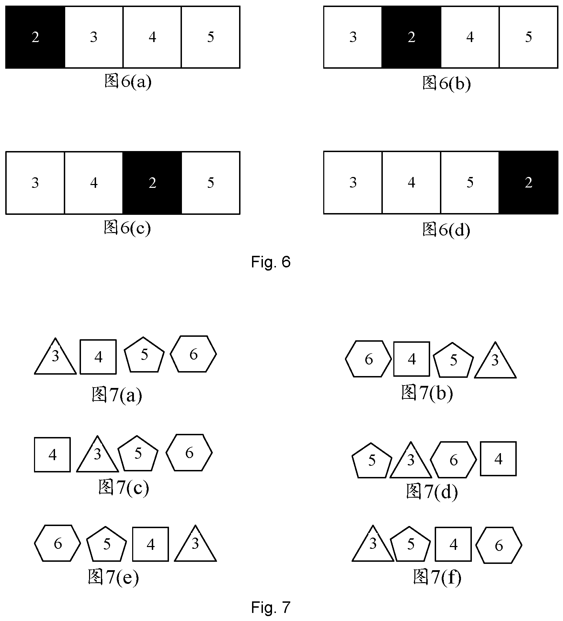

Exemplarily, the preset password set by the user is 2345, a target identifier corresponding to sub-code 2 is set to be a black identifier by means of the mapping rule setting page, and the other three sub-code numbers are set to correspond to a random color. As shown in Fig. 6(a) to Fig. 6(d), there are four input boxes of different colors (colors other than black are not displayed) on the unlocking page. The input boxes are used for inputting a plurality of sub-codes of an unlocking password, and the background colors of the input boxes are used for representing target identifiers. According to a preset transformation rule, the input positions of the plurality of sub-codes are random, and therefore, the display positions of the background colors of the input boxes may also be random. As shown in Fig. 6(a), the background colors of the input boxes of the plurality of sub-codes on the unlocking page are black, white, red and green (colors other than the black are not displayed), 2 corresponds to black, and the order of the remaining three numbers needs to remain consistent with the original password order. In this case, the password that needs to be input is 2345. As shown in Fig. 6(b), the background colors of the input boxes of the plurality of sub-codes on the unlocking page is white, black, red and green, and likewise, 2 corresponds to black, and the order of the remaining three numbers remains consistent with the original password order. In this case, the unlocking password corresponds to 3245. As shown in Fig. 6(c), according to a preset transformation rule, if the background colors of the input boxes of the plurality of sub-codes on the unlocking page is green, red, black and white, then the corresponding unlocking password is 3425. As shown in Fig. 6(d), if the background colors of the input boxes of the plurality of sub-codes on the unlocking page are white, green, red and black, then the corresponding unlocking password is 3452.

Exemplarily, the preset password set by the user is 3456, and by means of the mapping rule setting page, a target identifier corresponding to sub-code 3 is set to be a triangle identifier, a target identifier corresponding to sub-code 4 is set to be a quadrangle identifier, a target identifier corresponding to sub-code 5 is set to be a pentagon identifier, and a target identifier corresponding to sub-code 6 is set to be a hexagon identifier. As shown in Fig. 7(a) to Fig. 7(f), there are four input boxes of different shapes on the unlocking page. The input boxes are used for inputting a plurality of sub-codes of an unlocking password, and the shapes of the input boxes are used for representing target identifiers. According to a preset transformation rule, the input positions of the plurality of sub-codes are random, and therefore, the display positions of the shapes of the input boxes are also random. As shown in Fig. 7(a), the order of the shapes of the input boxes of the plurality of sub-codes on the unlocking page is triangle, quadrangle, pentagon and hexagon, and in this case, a password that needs to be input is 3456. As shown in Fig. 7(b), the order of the shapes of the input boxes of the plurality of sub-codes on the unlocking page is hexagon, quadrangle, pentagon and triangle, and in this case, the unlocking password corresponds to 6453. As shown in Fig. 7(c), the order of the shapes of the input boxes of the plurality of sub-codes on the unlocking page is quadrangle, triangle, pentagon and hexagon, and thus the corresponding unlocking password is 4356. As shown in Fig. 7(d), the order of the shapes of the input boxes of the plurality of sub-codes on the unlocking page is pentagon, triangle, hexagon and quadrangle, and thus the corresponding unlocking password is 5364. As shown in Fig. 7(e), the order of the shapes of the input boxes of the plurality of sub-codes on the unlocking page is hexagon, pentagon, quadrangle and triangle, and thus the corresponding unlocking password is 5364. As shown in Fig. 7(f), the order of the shapes of the input boxes of the plurality of sub-codes on the unlocking page is triangle, pentagon, quadrangle and hexagon, and thus the corresponding unlocking password is 5364.

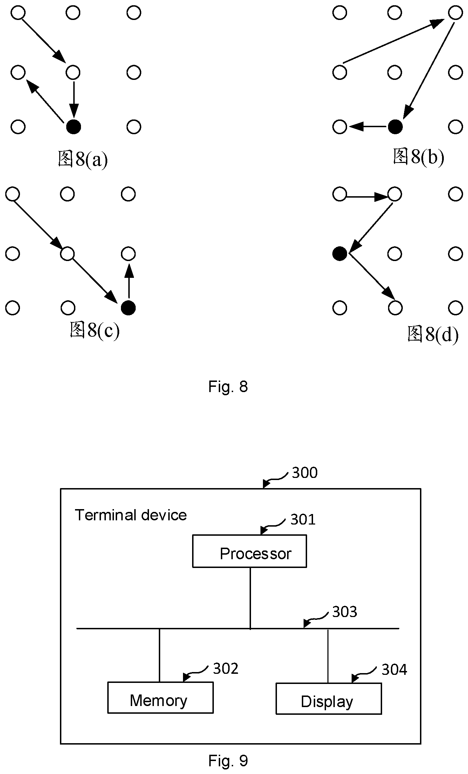

Exemplarily, the preset password set by a user is a pattern password, and pattern points of the pattern password may also be mapped and marked with different colors or in other distinguishable forms. After the user sets a mapping rule between a pattern point and a color identifier, a pattern matrix satisfying an unlocking requirement is generated according to a set preset dynamic rule, and the user completes pattern input according to his/her own password rule. As shown in Fig. 8(a) to Fig. 8(d), assuming that the target identifiers corresponding to the preset pattern password set by the user are red, blue, black and yellow (colors other than black are not displayed), then the pattern password for unlocking is shown as the arrows. The colors of a plurality of pattern points on the unlocking page are all different, and a sliding operation is performed between the plurality of pattern points according to the order of red, blue, black and yellow (colors other than black are not displayed), so that unlocking of the unlocking page can be completed.

The form of a password is also not limited to the form of a character string, and other modes for mapping recognition may also be applicable to the embodiments of the present disclosure. An object of displaying an unlocking password is to help a user better understand a dynamic password rule made thereby, so that the user knows the presentation form of the unlocking password in a real practical application, thereby helping the user be familiar with the unlocking password set thereby.

Exemplarily, a password setting page is displayed, and a plurality of sub-codes input in the password setting page are acquired to obtain a preset password; a mapping rule setting page is displayed, and in response to a setting operation on the mapping rule setting page, a target identifier corresponding to least one sub-code in the preset password is determined; and according to a preset transformation rule, the preset password and the target identifier, an unlocking password is generated and displayed. By means of displaying of the unlocking password, the teaching for a user to input the unlocking password on an unlocking page according to target identifiers can be realized, thereby ensuring that the user can quickly learn a method for using a dynamically changing unlocking password, improving password security, avoiding password leakage, greatly improving the security of a mobile terminal product, and being able to protect the user's property and privacy security to a greater extent.

Fig. 9 is a schematic structural block diagram of a terminal device provided according to embodiments of the present disclosure.

As shown in Fig. 9, the terminal device 300 comprises a processor 301 and a memory 302. The processor 301 and the memory 302 are connected by means of a bus 303, and the bus is, for example, an I2C (Inter-integrated Circuit) bus. The terminal device 300 further comprises a display 304. The display 304 is configured to display various types of pages, such as an unlocking page, a password setting page and a mapping rule setting page.

Specifically, the processor 301 is configured to provide computing and control capabilities, and supporting operation of the entire terminal device 300. The processor 301 may be a central processing unit (CPU), and the processor 301 may also be another general-purpose processor, digital signal processor (DSP), application specific integrated circuit (ASIC), field-programmable gate array (FPGA), or another programmable logic device, discrete gate or transistor logic device, discrete hardware component, or the like. The general-purpose processor may be a microprocessor; alternatively, the processor may also be any conventional processor, and the like.

Specifically, the memory 302 may be a Flash chip, a read-only memory (ROM) disk, an optical disc, a USB flash drive, a mobile hard disk, or the like.

A person skilled in the art would understand that the structure shown in Fig. 9 is only a block diagram of a partial structure related to the embodiments of the present disclosure, and does not constitute a limitation to the terminal device 300 to which the embodiments of the present disclosure are applied. A specific terminal device 300 may comprise more or fewer components than those shown in the figure, or combine some components, or have different component arrangements.

The processor is configured to run a computer program stored in the memory, and implement, when executing the computer program, any unlocking method provided according to embodiments of the present disclosure.

In some embodiments, the processor is configured to run a computer program stored in the memory, and implement, when executing the computer program, the following steps:
a target identifier corresponding to at least one sub-code in a preset password is acquired;
the target identifier is displayed according to an input position of the sub-code, wherein the input position of the sub-code dynamically changes according to a preset transformation rule;
a first password is acquired, the first password being input according to the target identifier; and
unlocking is performed according to the preset password, the preset transformation rule and the first password.

In some embodiments, when performing unlocking according to the preset password, the preset transformation rule and the first password, the processor is configured to implement:
conversion of the preset password according to the preset transformation rule to obtain a second password;
matching of the first password with the second password to obtain a first matching result; and
unlocking according to the first matching result.

In some embodiments, when performing unlocking according to the preset password, the preset transformation rule and the first password, the processor is configured to implement:
parsing of the first password according to the preset transformation rule to obtain a target password;
matching of the target password with the preset password to obtain a second matching result; and
unlocking according to the second matching result.

In some embodiments, after parsing the first password according to the preset transformation rule to obtain the target password, the processor is further configured to implement:
conversion of the target password on the basis of a preset password conversion rule to obtain a new target password.

In some embodiments, when displaying the target identifier according to the input position of the sub-code on the unlocking page, the processor is configured to implement:
determination of an input position of the sub-code on an unlocking page on the basis of a preset transformation rule; and
displaying of the target identifier at the input position of the sub-code.

In some embodiments, the processor is further configured to implement the following steps:
a password setting page is displayed;
a plurality of sub-codes input in the password setting page is acquired to obtain a preset password;
a mapping rule setting page is displayed;
in response to a setting operation on the mapping rule setting page, a target identifier corresponding to least one sub-code in the preset password is determined; and
an unlocking password is generated and displayed according to a preset transformation rule, the preset password and the target identifier.

In some embodiments, when generating and displaying the unlocking password according to the preset transformation rule, the preset password and the target identifier, the processor is configured to implement:
conversion of the preset password according to a preset transformation rule to obtain an unlocking password;
determination of a target sub-code corresponding to the target identifier in the unlocking password; and
displaying of the unlocking password, and displaying of the target identifier according to the target sub-code.

In some embodiments, when implementing, the processor is configured to implement: displaying of a password conversion rule setting page; acquisition of a password conversion rule set in the setting page; and conversion of the preset password on the basis of the password conversion rule to obtain a new preset password.

A person skilled in the art would have been able to clearly understand that, to make the description convenient and brief, for a specific working process of the terminal device described above, reference can be made to the corresponding process in the embodiments of the unlocking method above, and they will not be repeated herein.

Embodiments of the present disclosure further provide a storage medium for computer-readable storage. The storage medium stores one or more programs which can be executed by one or more processors to implement the steps of any unlocking method provided according to embodiments of the present disclosure.

The storage medium may be an internal storage unit of the terminal device described in the embodiments above, for example, a hard disk or a memory of the terminal device. The storage medium may also be an external storage device of the terminal device, for example, a plug-in hard disk, a smart media card (SMC), a secure digital (SD) card, a flash card, and the like that are equipped on the terminal device.

A person of ordinary skill in the art would understand that all or some of the steps of the methods disclosed above, and functional modules/units in systems and apparatuses can be implemented as software, firmware, hardware and any suitable combination thereof. In hardware embodiments, the division between functional modules/units referred to in the description above does not necessarily correspond to the division of physical components. For example, one physical component may have multiple functions, or one function or step may be cooperatively executed by several physical components. Some or all of the physical components may be implemented as software executed by a processor, such as a central processing unit, a digital signal processor, or a microprocessor, or implemented as hardware, or implemented as an integrated circuit, such as an application specific integrated circuit. Such software may be distributed on a computer-readable medium which may comprise a computer storage medium (or a non-transitory medium) and a communication medium (or a transitory medium). As is well known to a person of ordinary skill in the art, the term of computer storage medium comprises transitory and non-transitory, removable and non-removable media implemented in any method or technology for storage of information (such as computer-readable instructions, data structures, program modules, or other data). The computer storage medium comprises, but is not limited to, RAM, ROM, EEPROM, flash memory or other memory technology, CD-ROM, digital versatile disk (DVD) or other optical disc storage, magnetic cassette, magnetic tape, magnetic disk storage or other magnetic storage apparatuses, or any other medium that can be used to store desired information and can be accessed by a computer. In addition, it is well known to a person of ordinary skill in the art that the communication medium typically comprises computer-readable instructions, data structures, program modules, or other data in a modulated data signal such as a carrier or other transport mechanisms, and may comprise any information delivery medium.

The serial numbers in the embodiments of the present disclosure are only for description, and do not represent the preference of the embodiments. The content above only relates to specific embodiments of the present disclosure, and the scope of protection of the present disclosure is not limited thereto. Any equivalent modification or replacement would have been readily conceivable to a person skilled in the art within the technical scope disclosed in the present disclosure, and these modifications or replacements shall fall within the scope of protection of the present disclosure. Therefore, the scope of protection of the present disclosure shall be subject to the scope of protection of the claims.

## Claims

1. An unlocking method, comprising:
acquiring a target identifier corresponding to at least one sub-code in a preset password;
displaying the target identifier according to an input position of the sub-code, wherein the input position of the sub-code dynamically changes according to a preset transformation rule;
acquiring a first password, the first password being input according to the target identifier; and
performing unlocking according to the preset password, the preset transformation rule and the first password.

2. The unlocking method according to claim 1, wherein performing unlocking according to the preset password, the preset transformation rule and the first password comprises:
converting the preset password according to the preset transformation rule to obtain a second password;
matching the first password with the second password to obtain a first matching result; and
performing unlocking according to the first matching result.

3. The unlocking method according to claim 1, wherein performing unlocking according to the preset password, the preset transformation rule and the first password comprises:
parsing the first password according to the preset transformation rule to obtain a target password;
matching the target password with the preset password to obtain a second matching result; and
performing unlocking according to the second matching result.

4. The unlocking method according to claim 3, wherein after parsing the first password according to the preset transformation rule to obtain the target password, the method further comprises:
converting the target password on the basis of a preset password conversion rule to obtain a new target password.

5. The unlocking method according to claim 1, wherein displaying the target identifier according to the input position of the sub-code comprises:
determining the input position of the sub-code on an unlocking page on the basis of the preset transformation rule; and
displaying the target identifier at the input position of the sub-code.

6. The unlocking method according to any one of claims 1-5, wherein the method further comprises:
displaying a password setting page;
acquiring a plurality of sub-codes input in the password setting page to obtain the preset password;
displaying a mapping rule setting page;
in response to a setting operation on the mapping rule setting page, determining the target identifier corresponding to least one sub-code in the preset password; and
generating and displaying an unlocking password according to a preset transformation rule, the preset password and the target identifier.

7. The unlocking method according to claim 6, wherein generating and displaying the unlocking password according to the preset transformation rule, the preset password and the target identifier comprises:
converting the preset password according to a preset transformation rule to obtain the unlocking password;
determining a target sub-code corresponding to the target identifier in the unlocking password; and
displaying the unlocking password, and displaying the target identifier according to the target sub-code.

8. The unlocking method according to claim 6, wherein the method further comprises:
displaying a password conversion rule setting page;
acquiring a password conversion rule set in the setting page; and
converting the preset password on the basis of the password conversion rule to obtain a new preset password.

9. A terminal device, comprising a display, a processor, a memory, a computer program stored on the memory and executable by the processor, and a data bus for implementing connection and communication between the processor and the memory, wherein the computer program, when being executed by the processor, implements the steps of the unlocking method according to any one of claims 1 to 8.

10. A storage medium for computer-readable storage, the storage medium storing one or more programs which can be executed by one or more processors to implement the steps of the unlocking method according to any one of claims 1 to 8.
